# DEMANDE DE BREVET EUROPEEN

(11) **EP 4 686 406 A1**
(43) Date de publication de la demande: **04.02.2026**
(21) Numéro de dépôt: 25193004.6
(22) Date de dépôt: 31.07.2025
(51) Int. Cl.: A01N 63/10, A01N 63/20, A01N 63/22, A01N 65/03, A01P 21/00, C05F 3/00, C05F 11/08

(54) **BIOSTIMULANT LIQUIDE POUR LA CROISSANCE VÉGÉTALE**

(30) Priorité: 31.07.2024 FR 2408502
(71) Demandeur: Veragrow, 27100 Val-de-Reuil (FR)
(72) Inventeur: SAINT MARTIN, Théo, 27100 VAL-DE-REUIL (FR); GOTTE, Maxime, 27100 VAL-DE-REUIL (FR)
(74) Mandataire: Ex Materia

(57) **Abrégé**

La présente invention concerne un biostimulant liquide comprenant au moins un pourcentage massique de substances humiques compris entre 2% et 20%, un pourcentage massique d'extrait d'au moins une algue compris entre 2% et 20% et un extrait de lombricompost comprenant au moins une souche de bactérie du genre Bacillus, au moins une souche de bactérie du genre Azotobacter et au moins une souche de bactérie du genre Rhizobium.

## Description

La présente invention concerne un biostimulant utilisé comme agent stimulant de la croissance végétale notamment dans l'agriculture. La présente invention concerne plus particulièrement un tel biostimulant obtenu à partir de lombricompost.

Les biostimulants sont des intrants couramment utilisés, notamment dans l'agriculture dite « conventionnelle » et dans l'agriculture dite « biologique », pour améliorer la qualité et les rendements des cultures. Aujourd'hui, dans un contexte de développement de nouvelles méthodes de production, de nouveaux intrants sont recherchés pour favoriser les rendements des cultures tout en améliorant la qualité des sols et leur biodiversité à partir d'intrants répondant notamment aux critères d'agriculture biologique, tout en assurant des rendements optimaux.

Certains intrants existants permettent d'apporter aux cultures les éléments minéraux nécessaires à leur croissance. Toutefois, de tels produits ne répondent pas à l'ensemble des contraintes auxquelles sont soumises les plantes. En effet, de tels intrants ne sont pas aptes à assurer, notamment, une protection fongique, une protection contre le stress hydrique, la favorisation de symbioses entre des micro-organismes et les plantes ou encore de rendre disponible les éléments minéraux naturellement présents dans le sol.

Il en résulte que les exploitants agricoles doivent multiplier les intrants ainsi que les épandages pour offrir à leurs cultures les meilleures conditions de développement afin de favoriser à la fois les rendements et la biodiversité de leurs parcelles.

La présente invention s'inscrit dans ce contexte et se propose de pallier au moins certains inconvénients de l'art antérieur. La présente invention se propose notamment de fournir un biostimulant liquide pour tout type d'agriculture, mais aussi conforme aux exigences de l'agriculture biologique et permettant de répondre efficacement aux différentes contraintes que subissent les plantes durant leur croissance.

Ainsi, la présente invention porte sur un biostimulant liquide comprenant au moins un pourcentage massique de substances humiques compris entre 2% et 20%, un pourcentage massique d'extrait d'au moins une algue compris entre 2% et 20% et un extrait de lombricompost comprenant au moins une souche de bactérie du genre Bacillus, au moins une souche de bactérie du genre Azotobacter et au moins une souche de bactérie du genre Rhizobium.

Le biostimulant est adapté pour accroitre la biomasse microbienne du sol. D'une part, par l'apport de polysaccharides complexes et d'acides aminés issus notamment de l'extrait d'au moins une algue. D'autres part, par l'apport de biomasse microbienne issus de l'extrait de lombricompost. Il est à noter que l'apport de polysaccharides complexes et d'acides aminés peut également provenir, en complément de l'extrait d'au moins une algue, d'extraits de plantes.

Cette composition permet de faciliter la formation de symbioses entre la plante et des micro-organismes, de dégrader et de minéraliser efficacement la matière organique et/ou de solubiliser des nutriments confinés dans le sol.

En outre, les micro-organismes présents dans le biostimulant liquide participent à augmenter la biomasse de la base de la chaine alimentaire. Cet accroissement de la biomasse des premiers maillons de la chaîne alimentaire contribue à augmenter la biomasse des maillons plus tardifs, à titre d'exemple illustratif et non limitatif de l'invention les animaux fongivores ou encore les animaux insectivores, au niveau de la plante. L'accroissement de la microfaune des maillons plus tardifs permet ainsi d'assurer la régulation de ravageurs et de maladies.

Par ailleurs, la forte teneur en substances humiques issues notamment de l'extrait de lombricompost va avoir une action forte sur les propriétés physicochimiques du sol afin d'optimiser la mobilisation des nutriments du sol, qu'ils soient déjà présents et confinés ou apportés par des programmes de fertilisation.

Selon une caractéristique de l'invention, le biostimulant liquide comprend un pourcentage massique d'extrait de lombricompost compris entre 10% et 80%.

Selon une caractéristique de l'invention, le biostimulant liquide comprend un pourcentage massique d'extrait de lombricompost compris entre 40% et 70%.

Selon une caractéristique de l'invention, le pourcentage massique de substances humiques est compris entre 5% et 15%.

Selon une caractéristique de l'invention, le pourcentage massique de l'extrait d'au moins une algue est compris entre 5% et 15%.

Selon une caractéristique de l'invention, l'extrait d'au moins une algue est obtenu à partir d'algues issues de la classe des *Phaeophyceae.*

Selon une caractéristique de l'invention, l'extrait d'au moins une algue est obtenu à partir d'algues issues de la famille des *Laminariales.*

Selon une caractéristique de l'invention, le biostimulant liquide comprend un pourcentage massique de potassium compris entre 0,1% et 5%.

Selon une caractéristique de l'invention, le biostimulant liquide comprend un pourcentage massique d'azote compris entre 0,05 % et 5%.

Selon une caractéristique de l'invention, le biostimulant liquide comprend un pourcentage massique d'acides aminés compris entre 0,05% et 5%.

Selon une caractéristique de l'invention, le pourcentage massique d'acides aminés est compris entre 0,5% et 3%.

Selon une caractéristique de l'invention, le biostimulant liquide comprend un pourcentage massique de phosphore compris entre 0,01% et 0,5%.

Selon une caractéristique de l'invention, le biostimulant liquide comprend un pourcentage massique de saccharose compris entre 0,1% et 10%.

Selon une caractéristique de l'invention, le biostimulant liquide comprend un pourcentage massique de mélasse compris entre 5% et 15%.

Selon une caractéristique de l'invention, le biostimulant liquide comprend un pourcentage massique de xanthane compris entre 0,05% et 0,2%.

Selon une caractéristique de l'invention, le biostimulant liquide comprend un pourcentage massique de phénylpropanoïdes compris entre 0,05% et 0,5%.

Selon une caractéristique de l'invention, le biostimulant liquide comprend un pourcentage massique de solvant complété à 100%.

Selon une caractéristique de l'invention, le solvant majoritaire est de l'eau.

Selon une caractéristique de l'invention, le biostimulant liquide comprend un pH compris entre 2 et 12.

Selon une caractéristique de l'invention, le biostimulant liquide comprend un pH compris entre 3 et 5.

Selon une autre caractéristique de l'invention, le biostimulant liquide comprend un pH compris entre 6 et 8.

Selon une autre caractéristique de l'invention, le biostimulant liquide comprend un pH compris entre 8 et 12.

L'invention porte également sur l'utilisation d'un biostimulant liquide conforme à au moins l'une des caractéristiques précédemment évoquées pour le traitement du sol.

Selon une caractéristique de l'invention, le biostimulant liquide est appliqué dans un dosage compris entre 1 et 30 litres par hectare. Préférentiellement, le biostimulant liquide est appliqué dans un dosage compris entre 2 et 10 litres par hectare. Plus préférentiellement, le biostimulant liquide est appliqué dans un dosage compris entre 3 et 5 litres par hectare. Le biostimulant liquide peut être appliqué de une fois à quatre fois au cours du cycle de culture.

Selon une caractéristique de l'invention, le biostimulant liquide est utilisé au sein d'une installation de fertirrigation.

Selon une autre caractéristique de l'invention, le biostimulant liquide est utilisé pour réaliser un pralin. Ce pralin permet de réaliser un pralinage des racines d'une plante avant plantation de cette dernière.

Selon une autre caractéristique de l'invention, le biostimulant liquide est utilisé pour imprégner un fertilisant. Ce fertilisant peut par exemple se trouver sous la forme d'un engrais granulé.

Selon une caractéristique de l'invention, le biostimulant liquide est appliqué sur des sols par épandage.

D'autres caractéristiques, détails et avantages de l'invention ressortiront plus clairement à la lecture de la description qui suit d'une part, et d'exemples de réalisation donnés à titre indicatif et non limitatif en référence aux dessins schématiques annexés d'autre part, sur lesquels :

[Fig.1] représente schématiquement une vue générale d'une plante opérant des symbioses avec des micro-organismes présents dans le biostimulant liquide de sorte à favoriser l'activité photosynthétique et la captation de nutriment ;

[Fig.2] représente schématiquement l'impact de l'utilisation d'un biostimulant liquide conforme à la présente invention sur une culture de la pomme de terre par rapport à un témoin ;

[Fig.3] représente un histogramme témoignant de l'effet du biostimulant liquide selon l'invention sur les rendements d'une culture de pomme de terre par rapport à des biostimulants liquides basés respectivement sur l'utilisation de substances humiques seules ou de bactéries PGPR seules.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment considérer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

Il convient de noter que les pourcentages massiques qui seront évoqués dans la description qui suivra sont à considérer en fonction de la masse totale de biostimulant considéré.

L'invention propose un biostimulant pour assurer une bonne qualité des cultures et des rendements. Le biostimulant selon l'invention peut être utilisé notamment dans la sylviculture, l'horticulture, la viticulture, ou encore l'agriculture et ceux dans l'ensemble des systèmes de production agricole.

Selon un aspect de l'invention, le biostimulant est une composition liquide destinée à être diluée pour être appliquée, par exemple au moyen d'un pulvérisateur, au sol ou sur un support de culture. À titre d'exemples illustratifs et non limitatifs de l'invention, ce support de culture peut être formé par un compost, du terreau, de la tourbe, du sable, ou tout autre élément permettant d'assurer une croissance optimale d'une plante. On comprend de ce qui précède que lors de l'utilisation d'un support de culture, le biostimulant liquide est introduit au sein du support de culture, de préférence en assurant une homogénéisation entre le support de culture et le biostimulant liquide.

Selon un autre aspect de l'invention, le biostimulant est une composition liquide destinée à être appliquée pure, c'est-à-dire à une concentration maximale, sur un engrais ou amendement solide ou mélangée à un engrais liquide.

La fluidité de la composition du biostimulant selon l'invention s'apprécie selon la viscosité de ce dernier qui est comprise entre 0,02 et 0,25 Pascal-seconde.

En outre, pour permettre la pulvérisation de la composition par des systèmes de pulvérisation conventionnels notamment mis en œuvre dans l'agriculture, le biostimulant comprend des particules dont la taille est inférieure à 250µm, préférentiellement inférieure à 200µm, plus préférentiellement inférieure à 150µm, encore plus préférentiellement inférieure à 100µm.

Le biostimulant selon l'invention est un produit miscible au moins avec l'eau, préférentiellement le biostimulant selon l'invention est miscible avec toute solution aqueuse homogène. On comprend de ce qui précède que le mélange du biostimulant avec de l'eau permet d'obtenir un produit homogène. Ainsi, le biostimulant selon l'invention peut être pulvérisé sur des cultures par un pulvérisateur, alternativement le biostimulant peut être utilisé dans un système d'irrigation d'une installation de fertirrigation, alternativement le biostimulant peut également être utilisé dans des systèmes de production aéroponiques. Dans ces systèmes de production, la miscibilité du biostimulant permet son utilisation sans risquer d'obstruer les différentes buses de projection utilisées. Par ailleurs, cette miscibilité du biostimulant permet également son utilisation dans des systèmes hydroponiques dans lesquels le biostimulant peut être réparti de façon homogène.

Le biostimulant comprend de l'extrait de lombricompost. Le lombricompost est obtenu par la dégradation de matières organiques traitées par des lombrics. Ce lombricompost, également connu sous les dénominations de compost de vers ou encore d'humus de vers, peut être obtenu à partir de l'une quelconque des espèces de vers de terre appropriées à la formation de lombricompost. Le lombricompost peut notamment être obtenu à partir de l'une quelconque des espèces de lombrics suivantes : *Eisenia fetida, Eisenia andrei, Eisenia hortensis, Eudrilus eugeniae, Lumbricus rubellus.*

Le lombricompost est un élément essentiel du biostimulant, ce lombricompost présente de nombreux effets biostimulants. Ce lombricompost se caractérise notamment par une forte capacité à améliorer la qualité des sols en augmentant le ratio C/N, en améliorant l'activité enzymatique des sols, particulièrement l'activité des phosphatases permettant de rendre disponible les phosphates du complexe argilohumique et des uréases permettant de minéraliser l'azote uréique.

Le lombricompost comprend une grande richesse en micro-organismes apte à générer des symbioses avec notamment le système racinaire des plantes permettant de stimuler la croissance des plantes et d'améliorer la fixation de l'azote de ces plantes. Ces micro-organismes présentent également une activité enzymatique leur permettant de solubiliser les phosphates présents dans le sol et d'améliorer la protection des plantes contre des maladies telluriques.

De plus, le lombricompost utilisé dans la production du biostimulant permet de favoriser le développement dans les sols de nématodes fongivores, bactériophages et nématophages ainsi que de champignons mycorhiziens et bactéries PGPR acronyme anglais pour « Plant Growth Promoting Rhizobacteria »*.* Ces micro-organismes se développant suite à l'apport en biostimulant dans le sol améliore davantage l'action du biostimulant comme stimulateur de fertilité des sols, de réducteur de la sensibilité aux stress abiotiques et biotiques et de stimulateur de croissance.

Le lombricompost précédemment évoqué passe pas une étape d'extraction pour obtenir de l'extrait de lombricompost permettant de mettre en solution toutes les caractéristiques du lombricompost précédemment évoquées.

Plus spécifiquement, cet extrait de lombricompost est obtenu par un mélange de 100kg à 300kg de matière brute de lombricompost, c'est-à-dire du lombricompost à l'état solide traité par des lombrics, dans un volume d'eau compris entre 400 litres et 500 litres. De façon préférentielle, l'extraction du lombricompost est obtenu par un mélange de 150kg à 250kg de matière brute de lombricompost dans un volume de 450 litres d'eau. Le mélange du lombricompost dans ledit volume d'eau est réalisé sous agitation vive puis la phase liquide est récupérée et filtrée pour éliminer les particules présentant un diamètre supérieur à 100µm. Cette filtration peut être réalisée, par exemple, par centrifugation, décantation, ou tamisage.

Aussi, selon l'invention, le biostimulant comprend au moins une souche de bactérie du genre Bacillus, au moins une souche de bactérie du genre Azotobacter et au moins une souche de bactérie du genre Rhizobium. Ces bactéries sont utilisées pour leurs rôles biostimulateurs favorisant le développement des plantes.

Plus spécifiquement, le biostimulant peut notamment comprendre une combinaison de bactéries conforme à l'invention parmi *Azotobacter chroococcum, Azotobacter armeniacus, Azotobacter nigricans, Bacillus subtilis, Paenibacillus spp., Pseudomonas fluorescens, Pseudomonas sp., Brevibacterium, Mesorhizobium, Lysinibacillus, Bradyrhizobium, Azospirillum sp., Dietzia natronolimnaca, Flavobacterium sp., Brevundimonas sp., Rhizobium sp..*

Ces bactéries sont présentes dans le biostimulant dans un état de dormance permettant de limiter fortement l'activité microbienne au sein du biostimulant une fois conditionné. Pour favoriser la mise en dormance des microorganismes, le biostimulant comprend des conservateurs tels que le cinnamaldéhyde. De plus, la dormance des bactéries présentes dans le biostimulant liquide est permise, selon un mode de réalisation de l'invention, par le maintien du biostimulant liquide à un pH acide. Aussi, selon ce mode de réalisation de l'invention, le pH du biostimulant est compris entre 2 et 6, préférentiellement le pH du biostimulant est compris entre 3 et 5, préférentiellement le pH du biostimulant est compris entre 3,5 et 4,5, plus préférentiellement le pH du biostimulant est compris entre 3,8 et 4,3, encore plus préférentiellement le pH du biostimulant est compris entre 4,0 et 4,3.

Un pH du biostimulant compris dans les plages mentionnées permet de limiter la dégradation des composés par les micro-organismes présents dans le biostimulant dans un pH trop acide et de limiter l'activité microbienne dans un pH trop neutre. Plus spécifiquement un pH de 4,0 permet de limiter la dégradation des composés et des micro-organismes présents dans le biostimulant mieux qu'un pH de 3,8 et mieux qu'un pH de 3,5. De plus, un pH de 4,3 permet de limiter l'activité microbienne au sein du biostimulant mieux qu'un pH de 4,5 et mieux qu'un pH de 5. Dès lors, on comprend qu'un compromis doit être trouvé pour limiter l'activité microbienne dans le biostimulant sans dégrader les composés et les micro-organismes présents dans le biostimulant. Aussi, les inventeurs ont pu déterminer qu'un pH compris entre 3,5 et 4,5 et préférentiellement entre 3,8 et 4,3 permet d'obtenir un compromis optimal.

Le pH du biostimulant est maintenu dans les plages souhaitées par un apport en acide citrique dans un pourcentage massique compris 0,1% et 3%, préférentiellement entre 0,5% et 1,5%. Il convient de noter que le pourcentage massique d'acide citrique intégré dans le biostimulant est déterminé de sorte à obtenir un pH d'intérêt du biostimulant conforme à ce qui a été évoqué précédemment. De plus, tout autre acidifiant pourra être utilisé dans des pourcentages massiques optimaux dans l'objectif d'obtenir un pH conforme à ce qui a été précisé précédemment.

Les bactéries ainsi mises en dormance seront activées lors de l'élévation naturelle du pH intervenant lors de l'utilisation du biostimulant, par exemple lors de la dilution du biostimulant dans un volume d'eau à pH neutre avant pulvérisation sur des cultures.

Il est toutefois à noter que dans un mode de réalisation alternatif de l'invention, le pH du biostimulant liquide peut être maintenue à pH neutre, et plus précisément entre 6 et 8. Dans ce mode de réalisation de l'invention, la présence des conservateurs précédemment évoqués permet à elle seule de maintenir en dormance les microorganismes présents dans le biostimulant liquide. L'application d'un tel pH neutre compris entre 6 et 8 permet ainsi de conserver le pouvoir tampon du biostimulant liquide et de limiter la dégradation des microorganismes.

Dans un autre mode de réalisation de l'invention, le pH du biostimulant est maintenu entre 8 et 12. Dans ce mode de réalisation de l'invention, la présence des conservateurs et d'un pH alcalin permettent de maintenir la dormance des microorganismes. De plus, un pH basique de la solution permet de mieux solubiliser notamment les acides humiques présents dans le biostimulant liquide. Il est à noter que pour la mise en œuvre de ce mode de réalisation de l'invention, le biostimulant liquide comprend un agent alcalin tel que la cendre, la chaux ou encore la soude caustique.

En outre, l'extrait de lombricompost comprend de nombreux métabolites secondaires tels que des composés phénoliques favorisant la ramification du système racinaire et assurant une protection contre les stress oxydatifs.

De plus, le lombricompost comprend de nombreuses hormones végétales que l'on retrouve dans l'extrait de lombricompost. Ces hormones végétales sont notamment synthétisées par certaines bactéries présentes dans la microflore des lombrics et notamment des auxines, gibbérellines, cytokinines et des brassinostéroides. L'apport en phytohormones assuré par le biostimulant permet de stimuler efficacement la croissance des plantes, et notamment de favoriser la germination des graines et la croissance végétative. Par ailleurs, une telle présence en phytohormones permet également d'améliorer significativement l'activité photosynthétique et la taille des fruits des plantes. Une telle stimulation des plantes permet ainsi d'améliorer les rendements des cultures biostimulées par le biostimulant conforme à la présente invention.

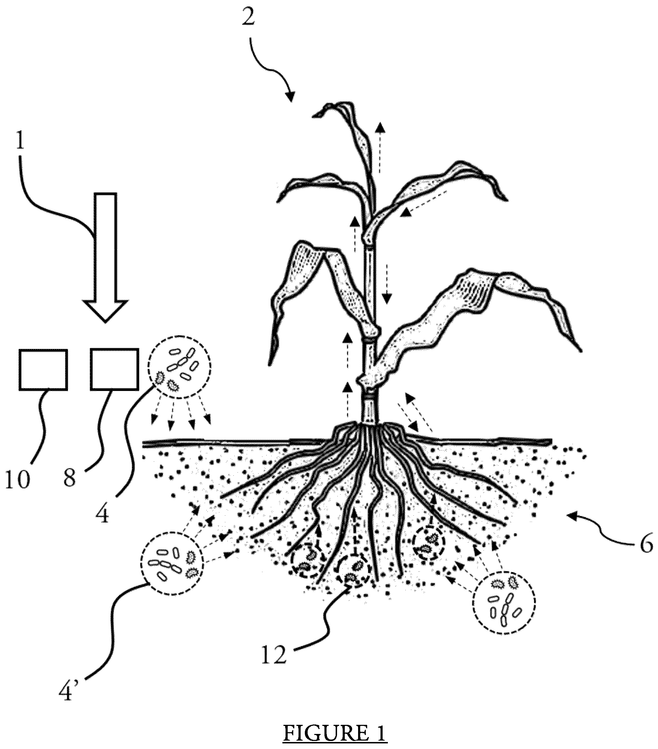

La figure 1 illustre ces actions de l'extrait de lombricompost sur une plante 2. En effet, l'introduction d'un biostimulant liquide 1 conforme à la présente invention au niveau du sol. Cela permet d'apporter à la plante 2, d'une part, la richesse en micro-organismes 4 au plus près de la plante 2, et plus spécifiquement de son système racinaire 6, et d'autre part des substances humiques 8 et un extrait d'au moins une algue 10 tel qu'il sera décrit plus en détail dans la description qui suivra. Ce dépôt des micro-organismes 4 au plus près de la plante 2 permet de favoriser la formation de symbioses 12 entre ces micro-organismes 4 et le système racinaire 6 de la plante 2. En outre, ces symbioses 12 favorisent la captation des nutriments dans le sol ce qui permet d'améliorer le système foliaire de la plante 2 et donc son activité photosynthétique.

Par ailleurs, l'extrait d'au moins une algue 10 est riche en alginates de haut poids moléculaire. Parmi les micro-organismes 4 apportés par le biostimulant liquide 1, des micro-organismes 4' permettent de dépolymériser des polysaccharides complexes ayant un faible effet biostimulant, tels que les alginates précédemment évoqués, en plus petites fractions de faible poids moléculaire telles que des oligoalginates qui ont un effet biostimulant bien supérieur.

Selon un mode de réalisation de l'invention, le biostimulant comprend un pourcentage massique d'extrait de lombricompost compris entre 10% et 80%, préférentiellement entre 30% et 80%, plus préférentiellement entre 40% et 80%, plus préférentiellement entre 40% et 70%, encore plus préférentiellement entre 50% et 70%.

L'extrait de lombricompost est obtenu par l'extraction des composés et de molécules d'intérêt du lombricompost résultant de la dégradation de la matière organique par les lombrics. Ce lombricompost est une matière solide qui n'est pas compatible avec un épandage par pulvérisation d'un produit liquide. On comprend de ce qui précède que l'extraction de lombricompost permet de conserver les composés et éléments d'intérêt du lombricompost tout en permettant, par exemple, la pulvérisation de cet extrait de lombricompost.

Plus spécifiquement, l'extrait de lombricompost est obtenu par l'extraction d'un pourcentage massique de lombricompost à l'état solide compris entre 2% et 40%, préférentiellement entre 10% et 40%, plus préférentiellement entre 20% et 30% dans un volume d'eau complété à 100%.

Dans les plages de pourcentage massique de lombricompost utilisé pour obtenir l'extrait de lombricompost décrit précédemment, l'extraction des composés d'intérêt présents dans la matière brute traitée par les lombrics est optimale. En effet, plus la teneur en matière brute est importante et plus la teneur en composés d'intérêt ou en micro-organismes dans l'extrait de lombricompost est importante. Toutefois, les inventeurs ont pu mettre en évidence qu'au-delà de 40% de lombricompost utilisé pour obtenir l'extrait de lombricompost, l'extraction n'est pas optimale et de nombreux composés d'intérêt ne sont pas extraits. Cependant, dans des teneurs trop faibles et plus précisément inférieures à 2%, la teneur en composés d'intérêt dans l'extrait de lombricompost est trop faible limitant son efficacité.

Aussi, on comprend qu'un compromis entre la qualité de l'extraction réalisée et la teneur en composés d'intérêt doit être trouvé. Les inventeurs ont pu déterminer que ce compromis optimal est atteint dans un pourcentage massique de lombricompost compris entre 5% et 40%, et préférentiellement entre 10% et 30%.

En outre, l'extrait de lombricompost comprend de hautes teneurs en substances humiques, et en particulier en acides humiques et en acides fulviques. Les substances humiques, telles qu'elles sont documentées notamment par Rose et al. 2014 «A Meta-Analysis and Review of Plant-Growth Response to Humic Substances» et Nardi et al. 2021 « Chemical Structure and Biological Activity ofHumic Substances Define Their Role as Plant Growth Promoters »*,* améliorent significativement la biodisponibilité des macro et micronutriments par leur capacité à chélater les minéraux. De plus, leurs formes chimiques complexes offrent une forte capacité à tamponner le pH du sol et à former des agrégats contribuant à améliorer la structure physique et physicochimique du sol. Outre leur action sur le sol limitant l'occurrence des stress hydriques et salins, les substances humiques activent les systèmes enzymatiques antioxydants permettant d'augmenter la résistance des plantes à ces mêmes stress.

Par ailleurs, les substances humiques ont également une action de type hormonale stimulant la croissance, notamment racinaire. Cette action a été mise en avant par Rose et al. 2014 particulièrement sur les substances humiques issues de lombricompost. L'origine de cette action est généralement attribué à leurs formes complexes qui permet d'enfermer au sein de ces grandes molécules des plus petites tels que les phytohormones (Canellas et al., 2002, 2015; Wong et al., 2020). Aussi, les substances humiques provenant du lombricompost sont formées en présence de phytohormones et parviennent à les enfermer au sein de leurs structures moléculaires. Ces substances humiques améliorent donc significativement l'efficacité du biostimulant.

Aussi, selon l'invention, le biostimulant comprend un pourcentage massique de substances humiques compris entre 2% et 20%, préférentiellement le biostimulant comprend un pourcentage massique de substances humiques compris entre 5% et 15%, plus préférentiellement le biostimulant comprend un pourcentage massique de substances humiques compris entre 7% et 12%. Il est à noter que ces pourcentages massiques de substances humiques sont obtenus conformément à la méthode d'analyse RD 1110/1991 (BOE 170 17/07/1991 Mét 4).

Plus spécifiquement, ces substances humiques comprennent des acides humiques favorisant notamment la disponibilité des nutriments et des acides fulviques favorisant l'assimilation des nutriments. Les acides humiques peuvent représenter entre 0,1% et 5% du pourcentage massique du biostimulant liquide et les acides fulviques peuvent représenter entre 1,9% et 15% du pourcentage massique du biostimulant liquide. De façon préférentielle, les acides humiques représentent entre 0,5% et 2% du pourcentage massique du biostimulant liquide. De façon préférentielle, les acides fulviques représentent entre 3% et 10% du pourcentage massique du biostimulant liquide.

Les inventeurs ont pu déterminer qu'une teneur trop importante en substances humiques dans le biostimulant augmente la possibilité de précipitation de particules au sein du biostimulant. De plus, une teneur en substances humiques trop importante augmente le ratio C/N des sols traités ce qui limite la disponibilité et l'assimilation de l'azote par les plantes.

Dans certains modes de réalisation, le pourcentage massique d'acide humique est égal au pourcentage massique d'acide fulvique à plus ou moins 1%. Dans d'autres modes de réalisation, le pourcentage massique d'acide fulvique est supérieur au pourcentage d'acide humique d'au moins 2%.

Les résultats présentés ci-dessous en lien avec le tableau 1 permettent de mettre en évidence l'impact de l'utilisation du biostimulant liquide, conforme à la présente invention, sur différentes cultures par rapport à un témoin appartenant à la même culture et sur lequel aucun biostimulant n'a été apporté.

Il est particulièrement remarquable que l'utilisation du biostimulant liquide à une dose de 5 litres par hectare (L/ha) sur une culture de blé au stade de la germination ou de la croissance de la plantule permet d'augmenter les rendements de 5,92 quintaux par hectare (q/ha) ce qui représente une hausse 6,8% des rendements. Il est également remarquable que l'utilisation du biostimulant liquide à une dose de 5 litres par hectare sur une culture de betterave au stade de la germination permet d'augmenter les rendements de 108,9 quintaux par hectare ce qui représente une hausse de 13% des rendements.

L'utilisation du biostimulant selon l'invention permet de surcroit d'améliorer les rendements en paille. Aussi, les essais réalisés sur une culture de lin ont mis en évidence que le biostimulant liquide permet d'améliorer l'assimilation des macro et micronutriments et notamment le phosphore, le bore et l'azote.

Cette amélioration de l'assimilation desdits macro et micronutriments se traduit sur la culture du lin pour une dose de 3 litres par hectare, appliquée au stade de la germination, par une augmentation de la longueur des tiges de 4 cm par rapport à une culture de lin témoin. Plus spécifiquement, l'application du biostimulant permet d'augmenter la longueur des tiges de lin de 7%. Cette augmentation de la longueur des tiges permet d'augmenter les rendements en paille de 0,26 tonne par hectare (t/ha) ce qui correspond à une augmentation des rendements de 6,4%.

**[Tableau 1]**

| Culture | | Quantité d'intrant (L/ha) | Rendement (q/ha) | Rendement en paille (t/ha) | Évolution Biostimulant/Témoin |
|---|---|---|---|---|---|
| Blé | Biostimulant | 5 | 92,48 | - | + 6,8% |
| | Témoin | 0 | 86,56 | - | |
| Betterave | Biostimulant | 5 | 976,1 | - | + 13% |
| | Témoin | 0 | 867,2 | - | |
| Lin | Biostimulant | 3 | - | 4,34 | + 6,4% |
| | Témoin | 0 | - | 4,08 | |

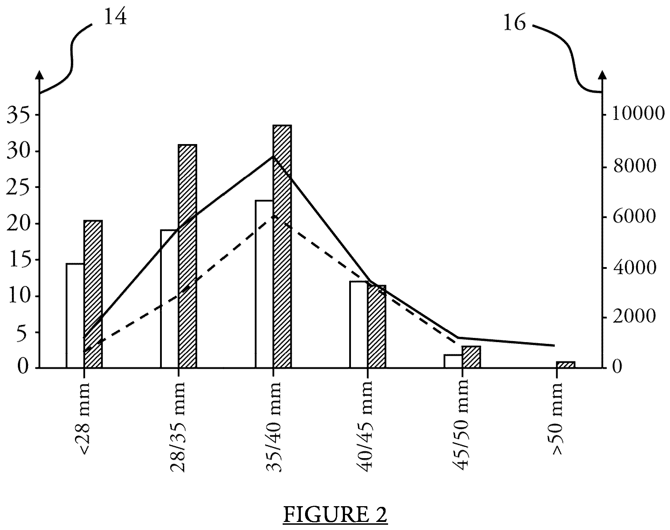

La figure 2 illustre un autre essai réalisé sur une culture de la pomme de terre avec un apport en biostimulant de 5 litres par hectare durant la plantation par rapport à un témoin sans biostimulant.

Ainsi, la figure 2 illustre par les histogrammes le nombre de tubercules 14 par calibre et par les courbes la masse récoltée en kilogramme 16 par calibre. Il est à noter que sur la figure 2, les résultats obtenus sur des pommes de terre sur lesquelles le biostimulant liquide a été appliqué sont représentés par les histogrammes hachurés et la courbe en trait plein, les résultats témoins sont représentés par les histogrammes en fond uni et par la courbe en trait pointillé.

Aussi, il est particulièrement remarquable de cet essai que l'utilisation du biostimulant permet d'augmenter le nombre de tubercules obtenues et le calibre de ces dernières. Cette augmentation se traduit par une augmentation de la masse récoltée et donc le gain financier associé.

Selon un aspect de l'invention, le biostimulant comprend un pourcentage massique d'extrait d'au moins une algue compris entre 2% et 20%, préférentiellement compris 5% et 15%, plus préférentiellement le biostimulant comprend un pourcentage massique d'au moins une algue compris entre 6% et 12%. Les inventeurs ont pu mettre en évidence que la présence d'extrait d'au moins une algue dans le biostimulant permet de stimuler la croissance des plantes et également les résistances aux stress hydrique, salin et thermique. De plus, les inventeurs ont également mis en évidence que la présence d'extraits d'algues dans les proportions précédemment définies permet d'améliorer les rendements et la qualité des récoltes.

L'extrait d'au moins une algue dans le biostimulant est riche en polysaccharides complexes aux propriétés biostimulantes. Ainsi, l'extrait d'au moins une algue comprend une combinaison d'au moins un polysaccharide parmi le mannitol, fucoïdanes, carraghénanes, laminarines, alginates.

En outre, l'extrait d'au moins une algue permet d'activer des gènes de l'immunité responsables de la synthèse de protéines PR et de composés phénoliques. L'extrait d'au moins une algue permet également d'augmenter le taux de chlorophylle et l'activité photosynthétique des plantes. De plus, une part importante des effets de l'extrait d'au moins une d'algue est attribuée à la présence de phytohormones notamment les auxines, les gibbérellines et les cytokinines venant accroitre la teneur en phytohormone du biostimulant. L'action de ces phytohormones va se traduire, entre autres, par une biomasse aérienne plus importante ainsi qu'un développement accru du système racinaire. Cette augmentation des systèmes racinaire et aérien permet de maximiser le prélèvement d'eau et de nutriments favorisant les rendements des cultures.

Les inventeurs ont tout particulièrement mis en évidence que l'apport de l'extrait d'au moins une algue est tout particulièrement optimisé chez les algues brunes de la classe des *Phaeophyceae.* Plus spécifiquement, selon un aspect de l'invention, l'extrait d'au moins une algue est obtenu à partir d'algues issues de la famille des *Laminariales.* Alternativement ou en combinaison, l'extrait d'au moins une algue peut être obtenu à partir d'algues issues de la famille des *Fucaceae.* À titre d'exemple, l'extrait d'au moins une algue peut être obtenu à partir d'*Ascophyllum nodosum.*

Plus spécifiquement, l'extrait d'au moins une algue comprend entre 7% et 17% de mannitol, entre 2% et 5% de fucoïdane, entre 1% et 9% de laminarine et entre 16% et 30% d'alginate. Ces valeurs sont exprimées en rapport masse / masse de produit sec, la teneur en matière sèche de l'extrait d'au moins une algue étant comprise entre 8% et 15%. Cet extrait d'algue peut notamment être trouvé sous l'appellation commerciale « ALGANACT^{™} EVP9 L ».

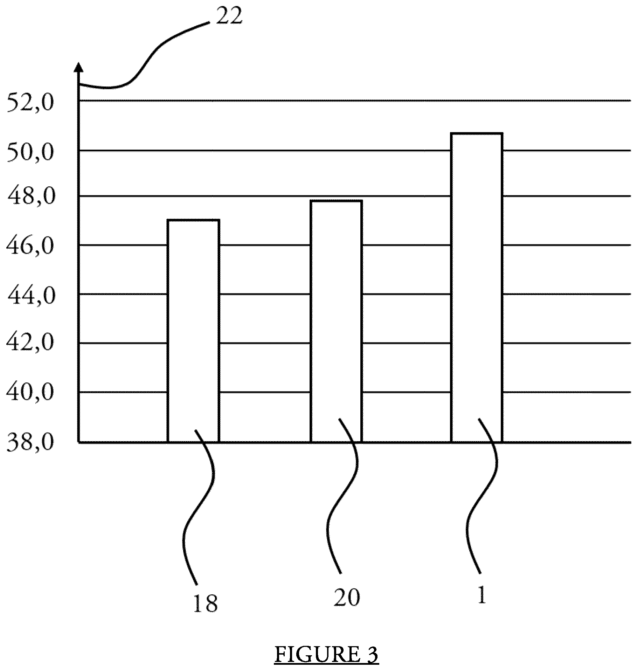

La figure 3 représente des modalités différentes pour un même essai réalisées sur une culture de pomme de terre mettant en évidence l'effet du biostimulant liquide 1 conforme à la présente invention par rapport à une première modalité 18 formée d'un biostimulant liquide comprenant seulement des substances humiques et par rapport à une deuxième modalité 20 formée d'un biostimulant liquide comprenant seulement des bactéries PGPR.

Ainsi, cette figure 3 permet de mettre en évidence l'effet du biostimulant liquide sur des rendements 22 en tonne par hectare de ladite culture de pomme de terre. Cette figure 3 permet notamment de mettre en évidence que l'effet du biostimulant liquide 1 sur les rendements 22 de la culture de pomme de terre est significativement supérieur aux rendements 22 obtenus par la première modalité 18 et par la deuxième modalité 20. En effet, le biostimulant liquide selon l'invention permet d'augmenter les rendements 22 d'environ 7% par rapport à la première modalité 18, c'est-à-dire par rapport à un biostimulant liquide basé sur les substances humiques, et d'augmenter les rendements 22 d'environ 5% par rapport à la deuxième modalité 20, c'est-à-dire par rapport à un biostimulant basé sur l'utilisation de bactéries PGPR. Les inventeurs ont notamment pu constater que l'impact du biostimulant liquide 1 selon l'invention sur les rendements 22 de la culture de pomme de terre vont au-delà de l'effet prédictible et ont constater une augmentation des rendements supérieure à l'effet bénéfique apporté respectivement par la première modalité 18 et par la deuxième modalité 20. Les inventeurs ont ainsi pu mettre en évidence un effet synergique entre l'utilisation des substances humiques et des bactéries PGPR présentes dans l'extrait de lombricompost.

En outre, dans certains modes de réalisation, le biostimulant comprend une haute teneur en acides aminés provenant de sources végétales et notamment de l'extrait de lombricompost et de l'extrait d'au moins une algue. Ces acides aminés d'origine exogène aux plantes permettent aux plantes de surmonter des situations de stress notamment liées aux périodes de sécheresse et à l'application de désherbant. En effet, leur origine exogène apporte aux plantes des acides aminés directement convertibles en protéines sans requérir leur biosynthèse.

Le biostimulant peut ainsi comprendre une combinaison d'acides aminés d'au moins l'un quelconque des acides aminés parmi Alanine, Arginine, Asparagine, Aspartate, Cystéine, Glutamate, Glutamine, Glycine, Histidine, Isoleucine, Leucine, Lysine, Méthionine, Phénylalanine, Proline, Pyrrolysine, Sélénocystéine, Sérine, Thréonine, Tryptophane, Tyrosine, Valine.

Aussi, le biostimulant comprend dans certains modes de réalisation un pourcentage massique d'acides aminés compris entre 0,05% et 5%, préférentiellement compris entre 0,5% et 3%, plus préférentiellement compris entre 1% et 2%.

Les inventeurs ont pu mettre en évidence que ces teneurs en acides aminés permettent de stimuler la nutrition azotée de la plante. De plus, dans ces teneurs, les acides aminés favorisent l'implantation des micro-organismes pour leur permettre une meilleure adaptation dans l'environnement dans lequel se trouve la plante.

En effet, les acides aminés sont une source importante de nutriments pour les micro-organismes des sols permettant alors d'accroitre la biomasse microbienne des sols et par voie de conséquence leurs activités métaboliques, c'est-à-dire la dégradation et la minéralisation de la matière organique, ainsi que leurs activités PGPR.

Il est à noter qu'à l'instar des polysaccharides, les acides aminés sont des sources de nutriments importantes pour les microorganismes du sol.

Dans certains modes de réalisation, le biostimulant comprend un pourcentage massique de potassium compris entre 0,1% et 5%, préférentiellement entre 0,5% et 2%, un pourcentage massique d'azote compris entre 0,05% et 5%, préférentiellement entre 0,1% et 2% et un pourcentage massique de phosphore compris entre 0,01% et 0,5%, préférentiellement entre 0,05% et 0,2%.

Dans certains modes de réalisation, le biostimulant comprend un pourcentage massique de mélasse compris entre 5% et 15%, préférentiellement entre 6% et 13%, plus préférentiellement entre 7% et 12%. Cette mélasse peut être obtenue à partir de betteraves sucrières ou encore à partir de cannes à sucre. Les inventeurs ont pu mettre en évidence que dans ces proportions, l'apport de mélasse permet d'apporter une haute teneur en nutriments et en composés phénoliques sans impacter la solubilité des autres composés lors de la préparation du biostimulant.

L'ajout de mélasse dans le biostimulant permet de valoriser un rebut de la production de sucre qui est très riche en sucres, en minéraux et en composés phénoliques qui ont des propriétés antioxydantes. La mélasse présente dans le biostimulant permet d'améliorer la fertilité des sols et notamment dans le cadre d'une fertilisation organique. De plus, la présence de mélasse dans le biostimulant améliore la croissance racinaire et aérienne des jeunes plantules et tout particulièrement en association avec des bactéries PGPR telles que celles associées au lombricompost auxquelles la mélasse apporte une source importante de nutriments pour leur développement.

En outre, la richesse en sucres et en nutriments présents dans la mélasse améliore la qualité du substrat pour la croissance des populations de micro-organismes. Ainsi, la mélasse participe à la revitalisation des sols stressés, par exemple à la suite d'inondations ou à une mécanisation excessive lors de la préparation des sols, et favorise la multiplication des bactéries commensales et bénéfiques qui limitent l'installation de pathogènes.

Le biostimulant peut ainsi comprendre un pourcentage massique de saccharose compris entre 0,1% et 10%, préférentiellement entre 0,3% et 7%, préférentiellement entre 0,5% et 5%, plus préférentiellement entre 1% et 4%.

Dans certains modes de réalisation, le biostimulant comprend un pourcentage massique de phénylpropanoïdes compris entre 0,05% et 0,5%, préférentiellement entre 0,1% et 0,3%.

Dans certains modes de réalisation, le biostimulant comprend un pourcentage massique de xanthane compris entre 0,05% et 0,2%. Le xanthane permet de créer un maillage permettant de retenir en suspension les particules et éviter ainsi la sédimentation des particules. Les inventeurs ont pu déterminer que dans ces pourcentages massiques, le xanthane permet de retenir en suspension les particules présentes dans le biostimulant tout en ajustant la viscosité à niveau satisfaisant entre 0,02 Pa.s et 0,25 Pa.s. En outre, le xanthane est un polysaccharide favorisant le développement microbien des sols traités.

La présente invention atteint bien le but qu'elle s'était fixé en proposant un biostimulant liquide conforme aux exigences de l'agriculture et notamment de l'agriculture dite « biologique » permettant de répondre efficacement aux différentes contraintes que subissent les plantes durant leur croissance.

La présente invention ne saurait toutefois se limiter aux modes de réalisation décrits ici et elle s'étend également à tout moyen et toute configuration équivalents ainsi qu'à toute combinaison techniquement opérante de tels moyens.

## Revendications

1. Biostimulant liquide comprenant au moins un pourcentage massique de substances humiques compris entre 2% et 20%, un pourcentage massique d'extrait d'au moins une algue compris entre 2% et 20% et un extrait de lombricompost comprenant au moins une souche de bactérie du genre Bacillus, au moins une souche de bactérie du genre Azotobacter et au moins une souche de bactérie du genre Rhizobium.

2. Biostimulant liquide selon la revendication 1, comprenant un pourcentage massique d'extrait de lombricompost compris entre 10% et 80%.

3. Biostimulant liquide selon l'une quelconque des revendications 1 et 2, comprenant un pourcentage massique d'extrait de lombricompost compris entre 40% et 70%.

4. Biostimulant liquide selon l'une quelconque des revendications 1 à 3, dans lequel le pourcentage massique de substances humiques est compris entre 5% et 15%.

5. Biostimulant liquide selon l'une quelconque des revendications 1 à 4, dans lequel le pourcentage massique de l'extrait d'au moins une algue est compris entre 5% et 15%.

6. Biostimulant liquide selon l'une quelconque des revendications 1 à 5, dans lequel l'extrait d'au moins une algue est obtenu à partir d'algues issues de la classe des Phaeophyceae.

7. Biostimulant liquide selon la revendication 6, dans lequel l'extrait d'au moins une algue est obtenu à partir d'algues issues de la famille des Laminariales.

8. Biostimulant liquide selon l'une quelconque des revendications 1 à 7, comprenant un pourcentage massique d'acides aminés compris entre 0,05% et 5%.

9. Biostimulant liquide selon la revendication 8, dans lequel le pourcentage massique d'acides aminés est compris entre 0,5% et 3%.

10. Biostimulant liquide selon l'une quelconque des revendications 1 à 9, comprenant un pourcentage massique de saccharose compris entre 0,1% et 10%.

11. Biostimulant liquide selon l'une quelconque des revendications 1 à 10, comprenant un pourcentage massique de mélasse compris entre 5% et 15%.

12. Biostimulant liquide selon l'une quelconque des revendications 1 à 11, comprenant un pourcentage massique de xanthane compris entre 0,05% et 0,2%.

13. Biostimulant liquide selon l'une quelconque des revendications 1 à 12, comprenant un pourcentage massique de solvant complété à 100%.

14. Utilisation d'un biostimulant liquide selon l'une quelconque des revendications précédentes pour le traitement du sol.

15. Utilisation d'un biostimulant liquide selon la revendication précédente, dans lequel le biostimulant liquide est appliqué dans un dosage compris entre 1 et 30 litres par hectare.
